# EUROPÄISCHE PATENTSCHRIFT

(11) **EP 0 902 217 B1**
(45) Veröffentlichungstag und Bekanntmachung des Hinweises auf die Patenterteilung: **25.06.2003**
(21) Anmeldenummer: 98115597.1
(22) Anmeldetag: 19.08.1998
(51) Int. Cl.: F16H 61/30

(54) **Stellantrieb für Schaltgetriebe von Kraftfahreugen**
Actuator for the gearbox of a motor vehicle
Actionneur pour boîte de vitesses des véhicules automobiles

(30) Priorität: 12.09.1997 DE 19740090
(43) Veröffentlichungstag der Anmeldung: 17.03.1999
(73) Patentinhaber: Hydraulik-Ring GmbH, 09212 Limbach-Oberfrohna (DE)
(72) Erfinder: Tischer, Dieter, 73240 Wendlingen (DE); Meyer, Roland, 91154 Roth (DE)
(74) Vertreter: Jackisch-Kohl, Anna-Katharina

(56) Entgegenhaltungen:
- EP-A- 0 490 730
- EP-A- 0 791 770
- DE-A- 2 517 456
- DE-A- 19 507 705
- US-A- 5 224 589

## Beschreibung

Die Erfindung betrifft einen Stellantrieb für Schaltgetriebe von Kraftfahrzeugen nach dem Oberbegriff des Anspruches 1.

Es sind Schaltgetriebe bekannt, bei denen zwei Aktuatoren fluchtend zueinander liegen. Zwischen ihnen befindet sich ein Steuerhebel, der durch die Aktuatoren verschwenkt wird, um im Schaltgetriebe die gewünschte Gasse anzufahren und den gewünschten Gang einzulegen. Da die Aktuatoren fluchtend zueinander angeordnet sind, hat der Stellantrieb eine verhältnismäßig große Länge, so daß er nicht überall eingesetzt werden kann.

Beim gattungsgemäßen Stellantrieb (EP-A-0 791 770) wirken jeweils zwei parallel nebeneinander liegenden Aktuatoren auf jeweils eine Wippe. Die Schwenkbewegung der Wippe wird dazu ausgenutzt, die Schaltwelle des Getriebes zu drehen und zu verschieben, um auf diese Weise die Gasse des Schaltgetriebes auszuwählen und den jeweiligen Gang einzulegen.

Es ist auch ein Stellantrieb bekannt (DE 195 07 705 A), bei dem zwei Aktuatoren vorgesehen sind, die parallel nebeneinander liegen und mit denen die Schaltwelle ebenfalls um ihre Achse gedreht sowie verschoben werden kann.

Der Erfindung liegt die Aufgabe zugrunde, den gattungsgemäßen Stellantrieb so auszubilden, daß er bei kompakter Ausbildung die Schaltwelle des Schaltgetriebes zuverlässig betätigen kann.

Diese Aufgabe wird beim gattungsgemäßen Stellantrieb erfindungsgemäß mit den kennzeichnenden Merkmalen des Anspruches 1 gelöst.

Die Aktuatoren des erfindungsgemäßen Stellantriebes sind im Gehäuse untergebracht. Jeder Wippe sind zwei Aktuatoren zugeordnet, mit denen die Wippen zum Drehen und Verschieben der Schaltwelle geschwenkt werden. Die Schwenkbewegung der Wippen wird über die Wellen, Hebel und die Verbindungsstange auf das Anlenkstück übertragen, das dreh- und verschiebefest mit der Schaltwelle verbunden ist. Auf diese Weise wird die Schwenkbewegung der Wippe in konstruktiv einfacher Weise bei kompakter Ausbildung des Stellantriebes in die zur Gassenwahl und zum Gangeinlegen notwendige Lage gedreht bzw. verschoben. Da die Aktuatoren parallel nebeneinander im Gehäuse untergebracht sind, ergibt sich eine raumsparende, insbesondere auch fertigungsgünstige Baueinheit, die auch dort eingebaut werden kann, wo nur wenig Einbauraum zur Verfügung steht.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer und schematischer Darstellung einen erfindungsgemäßen Stellantrieb,
- Fig. 2: in vergrößerter Darstellung und teilweise im Schnitt die Verbindung zwischen einer Welle des Stellantriebes und einer Schaltwelle eines Getriebes,
- Fig. 3: in vergrößerter Darstellung und teilweise im Schnitt zwei Aktuatoren des erfindungsgemäßen Stellantriebes zum Verschieben der Schaltwelle des Getriebes,
- Fig. 4: in vergrößerter Darstellung und teilweise im Schnitt zwei Aktuatoren des erfindungsgemäßen Stellantriebes zum Drehen der Schaltwelle des Getriebes um ihre Achse,
- Fig. 5: die Aktuatoren des erfindungsgemäßen Stellantriebes zum Verschieben der Schaltwelle in einer Neutralposition,
- Fig. 6 und Fig. 7: die Aktuatoren des erfindungsgemäßen Stellantriebes zum Verschieben der Schaltwelle in verschiedenen Schaltstellungen, in denen unterschiedliche Gänge eingelegt werden,
- Fig. 8 bis Fig. 11: jeweils im Schnitt die Aktuatoren des erfindungsgemäßen Stellantriebes zum Drehen der Schaltwelle in unter-schiedlichen Schaltstellungen zum Anwählen unter-schiedlicher Gassen.

Der im folgenden beschriebene Stellantrieb dient dazu, bei Schaltgetrieben von Kraftfahrzeugen die Schaltwelle zu verstellen, um unterschiedliche Gänge des Getriebes einzulegen bzw. unterschiedliche Gassen des Getriebes anzufahren.

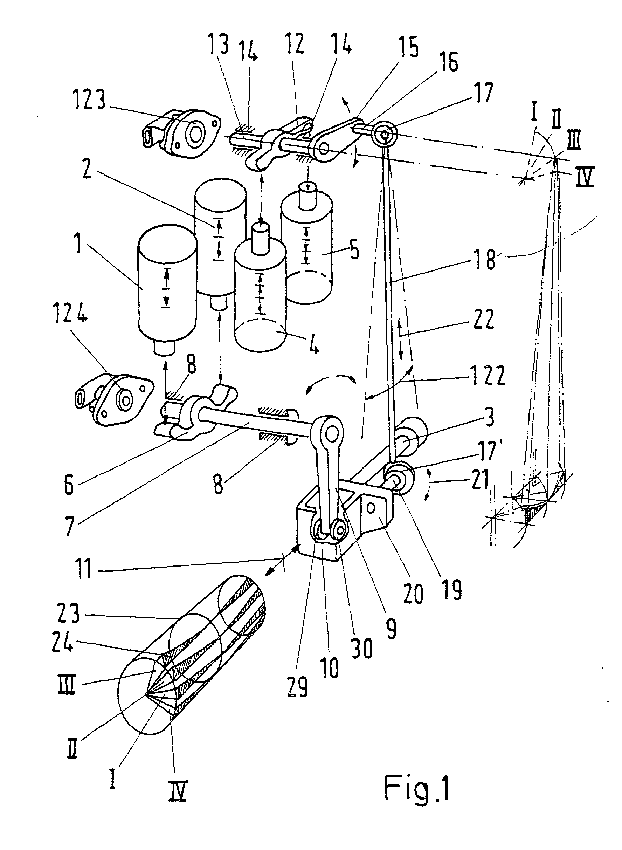

Der Stellantrieb hat, wie Fig. 1 zeigt, zwei achsparallel zueinander liegende Aktuatoren 1, 2, mit denen die Schaltwelle 3 des Getriebes des Kraftfahrzeuges in noch zu beschreibender Weise in Achsrichtung verschoben werden kann, um die Gänge einzulegen. Der Stellantrieb hat zwei weitere Aktuatoren 4 und 5, die achsparallel zueinander und zu den Aktuatoren 1, 2 liegen und mit denen in noch zu beschreibender Weise die Schaltwelle 3 um ihre Achse gedreht wird, um die jeweilige Gasse des Getriebes anzufahren. Die Aktuatoren 1, 2 wirken mit einer Wippe 6 zusammen, die drehfest auf einer Welle 7 sitzt, die senkrecht zur Achsrichtung der Aktuatoren 1, 2 und zur Schaltwelle 3 verläuft. Die Welle 7 ist in Lagern 8 drehbar gelagert und trägt am freien Ende einen senkrecht von ihr abstehenden einarmigen Hebel 9, der in ein Lagerstück 10 eingreift, das drehfest mit der Schaltwelle 3 verbunden ist. Die Aktuatoren 1, 2 können die Wippe 6 um ihre Achse schwenken, wodurch die Welle 7 entsprechend gedreht wird. Dies hat zur Folge, daß der Hebel 9 entsprechend geschwenkt wird. Das Lagerstück 10 wird dadurch vom Hebel 9 in Richtung des Doppelpfeiles 11 in Fig. 1 verschoben. Da das Lagerstück 10 fest mit der Schaltwelle 3 verbunden ist, wird sie in entsprechendem Maße axial verschoben und auf diese Weise der jeweilige Gang eingelegt.

Die beiden Aktuatoren 4, 5 wirken mit einer weiteren Wippe 12 zusammen, die drehfest auf einer Welle 13 sitzt. Sie erstreckt sich senkrecht zur Achse der Aktuatoren 4, 5 sowie parallel zur Welle 7. Die Welle 13 ist in Lagern 14 drehbar gelagert und ist am freien Ende mit einem senkrecht abstehenden einarmigen Hebel 15 versehen, der drehfest auf der Welle 13 sitzt. Vom freien Ende des Hebels 15 steht ein Achsstück 16 senkrecht ab, das parallel zur Welle 13 liegt und an der von der Wippe 12 abgewandten Seite des Hebels 15 vorgesehen ist. An das freie Ende des Achsstückes 16 ist über ein Kugelgelenk 17 eine Verbindungsstange 18 angelenkt, deren anderes Ende über ein weiteres Kugelgelenk 17' gelenkig mit dem freien Ende eines Achsstückes 19 verbunden ist. Es liegt parallel neben der Schaltwelle 3 und steht senkrecht von einem vom Lagerstück 10 quer abstehenden Flansch 20 ab.

Durch Betätigen der Aktuatoren 4, 5 wird die Wippe 12 um ihre Achse gedreht. Da sie drehfest auf der Welle 13 sitzt, wird sie entsprechend gedreht. Der Hebel 15 wird dementsprechend geschwenkt. Die Verbindungsstange 18 wird dadurch um den Anlenkpunkt des Kugelgelenkes 17 geringfügig geschwenkt. Da die Verbindungsstange 18 über das Kugelgelenk 17 mit dem Achsstück 19 des Lagerstückes 10 verbunden ist, wird aufgrund dieser Schwenkbewegung die Schaltwelle 3 um ihre Achse gedreht. Auf diese Weise wird die Gasse des Getriebes für das nachfolgende Einlegen des Ganges ausgewählt. Beim Verschwenken des Hebels 15 wird die Verbindungsstange 18 nicht nur in Richtung des Doppelpfeiles 21 geschwenkt, sondern auch in Richtung des Doppelpfeiles 22 in ihrer Längsrichtung verschoben.

Wird die Schaltwelle 3 in der beschriebenen Weise zum Gangeinlegen in Pfeilrichtung 11 verschoben, wird die Verbindungsstange 18 um den Anlenkpunkt des Kugelgelenkes 17 geringfügig verschwenkt (Pfeil 122). Aufgrund der Schwenkbewegung 122 der Verbindungsstange 18 ergibt sich eine geringe rotatorische Bewegung der Schaltwelle 3, die über die Länge der Verbindungsstange 18 jedoch so abgestimmt ist, daß diese Bewegung innerhalb der angewählten Gasse erfolgt. Es ist somit sichergestellt, daß beim Einlegen des Ganges die ausgewählte Gasse des Getriebes nicht verlassen wird.

In Fig. 1 ist das Bewegungsdiagramm der Schaltwelle 3 in Form eines Zylinders angegeben. Der mittlere Kreis 23 des Bewegungsdiagrammes zeigt die Mittel- bzw. Neutralstellung des Getriebes. Aus dieser Mittelstellung 23 kann die Schaltwelle 3 zum Einlegen des Ganges in die jeweilige Richtung längs des Mantels des gedachten Bewegungszylinders verschoben werden. Aufgrund der beschriebenen geringfügigen Verschwenkung der Verbindungsstange 18 beim Gangeinlegen ergibt sich auf dem Zylindermantel nicht eine gerade, sondern eine leicht gebogene Bewegungskurve 24, die geringfügig kürzer als die Mantellänge des gedachten Bewegungszylinders ist. Die Krümmung dieser Bewegungskurve 24 ist allerdings so gering, daß beim Einlegen des Ganges die angewählte Gasse des Getriebes nicht verlassen wird.

Um eine andere Gasse anzuwählen, muß die Schaltwelle 3 um ihre Achse gedreht werden. Im dargestellten Ausführungsbeispiel werden insgesamt vier Gassen I bis IV angewählt. Aus dem Bewegungsdiagramm ist erkennbar, daß die Schaltwelle 3 um größere Winkel gedreht werden muß, um von der einen in die andere Gasse zu gelangen. Diese Drehwinkel sind auf jeden Fall wesentlich größer als die beim Einlegen des Ganges aus den geringfügigen Drehbewegungen der Schaltwelle 3 sich ergebenden Drehwinkel, die durch die gekrümmten Bewegungskurven im Bewegungsdiagramm veranschaulicht sind.

Für die Welle 13 ist in Fig. 1 ebenfalls ein Bewegungsdiagramm dargestellt. Es sind die vier Stellungen 1 bis IV des Hebels 15 bzw. des Kugelgelenkes 17 dargestellt, die den entsprechenden Gassen I bis IV entsprechen.

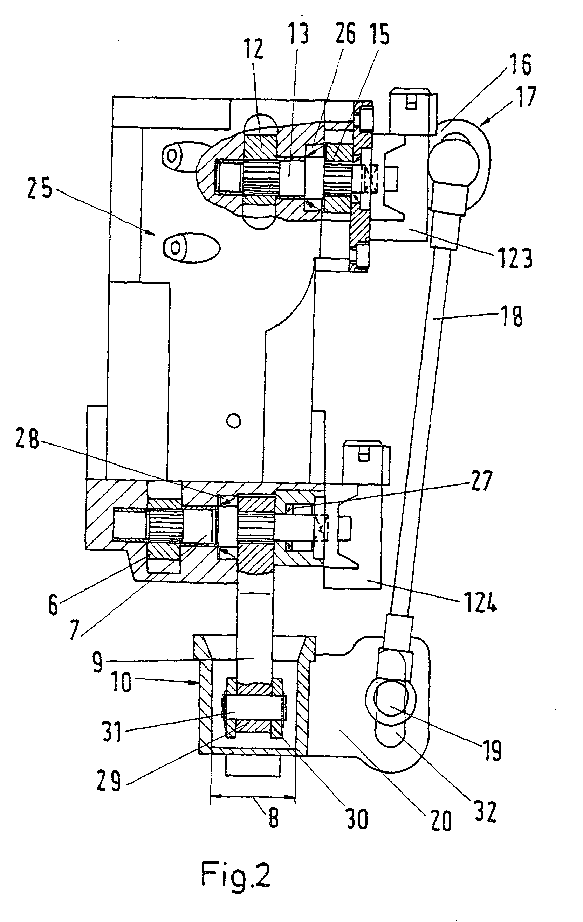

Fig. 2 zeigt ein Gehäuse 25, in dem die Aktuatoren 1, 2; 4, 5 untergebracht sind. An dem in Fig. 2 oberen Endbereich des Gehäuses 25 ist die Welle 13 untergebracht, auf der innerhalb des Gehäuses 25 die Wippe 12 sitzt. Der einarmige Hebel 15 ist innerhalb des Gehäuses 25 auf der Welle 13 angeordnet und über das Verbindungsstück 16 und das Kugelgelenk 17 mit der Verbindungsstange 18 gelenkig verbunden. Die Welle 13 ist im Gehäuse 25 durch wenigstens eine Dichtung 26 abgedichtet.

in dem in Fig. 2 unteren Endbereich ist im Gehäuse 25 die Welle 7 drehbar gelagert. Auf ihr sitzt innerhalb des Gehäuses 25 der einarmige Hebel 9, der nach unten aus dem Gehäuse 25 ragt. Innerhalb des Gehäuses 25 sitzt auf der Welle 7 die Wippe 6. Die Welle 7 ist im Gehäuse 25 durch zwei Dichtungen 27, 28 abgedichtet.

Am freien Ende des Hebels 9 sitzen auf beiden Seiten Laufscheiben 29, 30, die durch einen den Hebel 9 durchsetzenden Bolzen 31 miteinander und mit dem Hebel 9 verbunden sind.

Das Lagerstück 10 hat, wie Fig. 1 zeigt, rechteckigen Querschnitt und ist napfförmig ausgebildet. Der Hebel 9 liegt mit den Laufscheiben 29, 30, die flächig an den beiden einander gegenüberliegenden Außenseiten des Hebels 9 anliegen, innerhalb des Lagerstückes 10. Die Laufscheiben 29, 30 sind vorzugsweise um ihre Achsen drehbar und ragen nach unten über den Hebel 9. Der Durchmesser der Laufscheiben 29, 30 ist, wie Fig. 1 zeigt, größer als die Breite des Hebels 9. Dadurch kommen beim Verschwenken des Hebels 9 nur die Laufscheiben 29, 30 mit den quer zur Bewegungsrichtung 11 (Fig. 1) liegenden Innenwandungen des Lagerstückes 10 in Berührung. Da die Laufscheiben 29, 30 frei drehbar sind, läßt sich das Lagerstück 10 und damit die Schaltwelle 3 mit gutem Wirkungsgrad in Verschieberichtung 11 zum Einlegen des Ganges verschieben.

Der senkrecht vom Lagerstück 10 abstehende Flansch 20 hat ein Langloch 32, durch das das Verbindungsstück 19 ragt. Das Langloch 32 erstreckt sich senkrecht zur Verschieberichtung 11 des Lagerstükkes 10 bzw. der Schaltwelle 3. Durch das Langloch 32 ist es einfach möglich, bei der Montage der Verbindungsstange 18 Toleranzen auszugleichen. In montierter Lage ist das Verbindungsstück 19 fest mit dem Flansch 20 verbunden.

Die innere Breite B des Lagerstückes 10 ist größer als die Länge des Bolzens 31 bzw. der Abstand der Laufscheiben 29, 30 voneinander. Dadurch ist gewährleistet, daß der Hebel 9 mit seinen Laufscheiben 29, 30 ausreichenden seitlichen Abstand von der Innenwandung des Lagerstückes 10 hat. Darum kann das Lagerstück 10 ohne Beeinträchtigung durch den Hebel 9 von der Verbindungsstange 18 zur Wahl der Gasse des Getriebes geschwenkt werden.

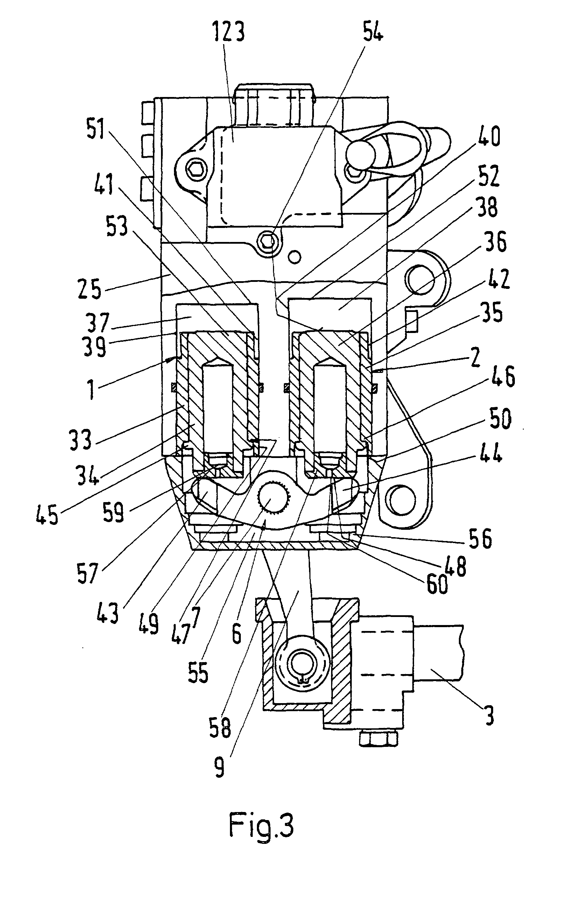

Die beiden Aktuatoren 1, 2 liegen innerhalb des Gehäuses 25 mit geringem Abstand parallel nebeneinander (Fig. 3) und weisen jeweils zwei Kolben 33, 34 und 35, 36 auf. Die Kolben 33, 35 sind büchsenförmig als Hohlkolben ausgebildet, die in einem Zylinderraum 37, 38 verschiebbar geführt sind. Die beiden Kolben 33, 35 liegen abgedichtet an der Bohrungswandung 39, 40 an. Nahe dem oberen Ende sind die beiden Kolben 33, 35 im Außendurchmesser verringert, so daß dort jeweils ein Ringraum 41, 42 gebildet wird, der sich über weniger als die halbe Länge des Kolbens 33, 35 erstreckt.

An der Innenwandung der Kolben 33, 35 liegen die inneren Kolben 34, 36 ohne Verwendung von Dichtelementen an. Die inneren Kolben ragen über die Hohlkolben 33, 35 nach unten und liegen an den freien Enden 43, 44 der Wippe 6 an. Die Kolben 34, 36 sind nahe ihrem unteren Ende mit einem radial nach außen ragenden Ringflansch 45, 46 versehen, der als Anschlag für die Kolben 34, 36 dient. Mit ihnen liegen die Kolben 34, 36 in der in Fig. 3 dargestellten Neutrallage an einer inneren Ringschulterfläche 47, 48 der Hohlkolben 33, 35 an. Die inneren Kolben 34, 36 liegen in der Neutralstellung an den freien Enden 43, 44 der Wippe 6 an. Die Hohlkolben 33, 35 liegen ihrerseits mit ihren unteren Stirnflächen an Anschlägen 49, 50 eines Deckels 56 an. In dieser Neutralstellung haben die Kolben 33 bis 36 Abstand vom Boden 51, 52 der Zylinderräume 37, 38. Die inneren Kolben 34, 36 weisen auf ihrer den Böden 51, 52 zugewandten Stirnseite einen Vorsprung 53, 54 auf, dessen Durchmesser kleiner ist als der Durchmesser des inneren Kolbens 34, 36.

Die Wippe 6 liegt in einem Wippenraum 55, der durch den lösbaren Deckel 56 geschlossen ist. Der Wippenraum 55 kann sich während des Betriebes mit Hydraulikmedium füllen. Dies hat den Vorteil, daß die Kolben 33 bis 36 nicht zuverlässig abgedichtet werden müssen und lediglich zwei preisgünstige Dichtelemente erforderlich sind. Der Wippenraum 55 steht mit den Kolben in Verbindung. Die inneren Kolben 34, 36 ragen in der in Fig. 1 dargestellten Neutralstellung, in der sie mit ihren Ringflanschen 45, 46 an den Ringschulterflächen 47, 48 der Hohlkolben 33, 35 anliegen, nach unten in den Wippenraum 55. In dieses untere Ende der inneren Kolben 34, 36 ist ein Verschlußstück 57, 58 eingesetzt, das von wenigstens einer Bohrung 59, 60 durchsetzt ist. Somit kann das im Wippenraum 55 befindliche Medium in den inneren Kolben 34, 36 gelangen. Die Hohlbohrung der inneren Kolben 34, 36 dient der Gewichtseinsparung.

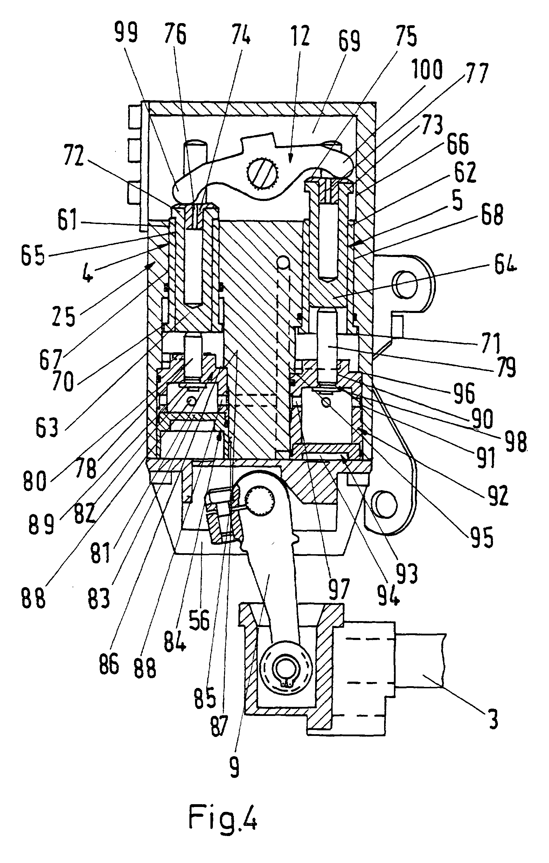

Wie Fig. 4 zeigt, sind im Gehäuse 25 auch die beiden Aktuatoren 4, 5 mit geringem Abstand nebeneinander untergebracht. Sie haben jeweils einen äußeren Hohlkolben 61, 62, in denen jeweils ein innerer Kolben 63, 64 verschiebbar geführt ist. Die Hohlkolben 61, 62 liegen abgedichtet an einer Innenwandung 65, 66 von Bohrungen 67, 68 an. Im Bereich oberhalb der Kolben 61 bis 64 ist in einem Wippenraum 69 die Wippe 12 untergebracht.

Die Hohlkolben 61, 62 weisen an ihrem unteren Ende einen nach außen gerichteten Ringflansch 70, 71 auf, während die inneren Kolben 63, 64 an ihrem oberen, der Wippe 12 zugewandten Ende mit einem umlaufenden Ringflansch 72, 73 versehen sind. Die inneren Kolben 63, 64 sind wie die inneren Kolben 34, 36 der Aktuatoren 1, 2 hohl ausgebildet. Die Hohlräume sind durch Verschlußstücke 74, 75 verschlossen, die von mindestens einer Bohrung 76, 77 durchsetzt sind.

Die inneren Kolben 63, 64 sitzen mit ihren unteren Stirnseiten auf bolzenförmigen Kolben 78 und 79 auf. Der Kolben 78 ist kürzer als der Kolben 79.

Der kürzere Kolben 78 ragt durch eine Kolbenbohrung 80 in ein napfförmiges Lagerstück 81, dessen Boden 82 den Kolben 61, 63 zugewandt und von der Kolbenbohrung 80 durchsetzt ist.

Das Lagerstück 81 liegt mit seiner Stirnseite auf dem Boden 83 eines napfförmigen Lagerstückes 84 auf, das mit seiner Stirnseite am Dekkel 56 anliegt. Beide Lagerstücke 81, 84 liegen axial unbeweglich in einem Aufnahmeraum 85 des Gehäuses 25. Wie Fig. 4 zeigt, liegen die Lagerstücke 81, 84 abgedichtet an der Wandung des Aufnahmeraumes 85 an. Das obere Lagerstück 81 liegt mit einer Schulterfläche 86 an einer Ringschulter 87 der Innenwandung des Aufnahmeraumes 85 an.

In das Lagerstück 81 münden Öffnungen 88, die gleichmäßig verteilt über den Umfang der Wandung des Lagerstückes vorgesehen sind und durch die Hydraulikmedium zur Beaufschlagung des bolzenförmigen Kolbens 78 eingebracht werden kann. Er weist an seinem im Lagerstück 81 liegenden Ende einen Anschlag 89 auf, mit dem der Kolben in der in Fig. 4 dargestellten Lage unter Druckbeaufschlagung durch das im Lagerstück 81 befindliche Druckmedium am Boden 82 des Lagerstückes 81 anliegt.

Der bolzenförmige Kolben 79 ragt ebenfalls durch eine Kolbenbohrung 90 im Boden 91 eines Lagerstückes 92, das grundsätzlich gleich ausgebildet ist wie das Lagerstück 81, jedoch länger als dieses ist. Dafür ist das untere Lagerstück 93, auf dem das Lagerstück 92 mit seiner Stirnseite aufliegt, kürzer als das Lagerstück 84. Beide Lagerstücke 92, 93 sind axial unverschiebbar in einem Aufnahmeraum 94 des Gehäuses untergebracht. Die Lagerstücke 92, 93 liegen abgedichtet an der Innenwandung des Aufnahmeraumes 94 an. Das obere Lagerstück 92 liegt mit einer Schulterfläche 95 an einer umlaufenden Ringschulter 96 in der Innenwandung des Aufnahmeraumes 94 an.

In den Innenraum des Lagerstückes 92 münden wiederum mehrere Öffnungen 97, die vorzugsweise gleichmäßig verteilt über den Umfang des Lagerstückes 92 vorgesehen sind und über die Hydraulikmedium eingebracht werden kann. Mit ihm wird der Kolben 79 beaufschlagt, dessen im Lagerstück 92 liegendes Ende mit einem Anschlag 98 versehen ist, mit dem er in der in Fig. 4 dargestellten Lage am Boden 91 des Lagerstückes 92 anliegt.

Der Wippenraum 69 kann sich wie der untere Wippenraum 55 (Fig. 3) während des Betriebes mit Hydraulikmedium füllen. Die Kolben 63 bis 66 sind mit dem Wippenraum 69 in Verbindung und müssen darum nicht zuverlässig abgedichtet werden. Innerhalb des Wippenraumes 69 liegen die inneren Kolben 63, 64 an den freien Enden 99, 100 der Wippe 12 an.

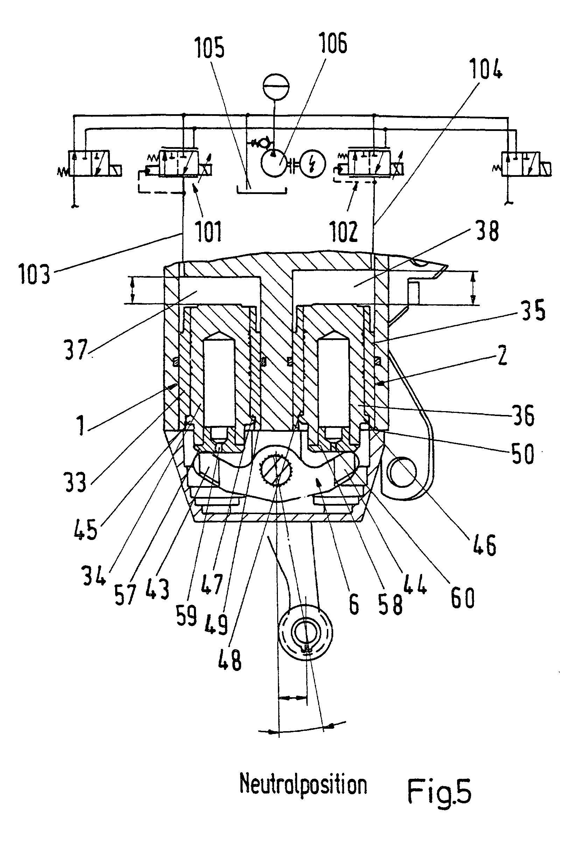

Fig. 5 zeigt die Kolben 33 bis 36 der Aktuatoren 1, 2 in einer Lage, in der sich die Schaltwelle 3 des Getriebes in der Neutralstellung befindet. Die inneren Kolben 34, 36 liegen mit ihren Flanschen 45, 46 an den Ringschulterflächen 47, 48 der Hohlkolben 33, 35 an, die ihrerseits mit ihren der Wippe 6 zugewandten Stirnseiten an den deckelseitigen Anschlägen 49, 50 anliegen. Die Zylinderräume 37, 38 sind an Wegeventile 101, 102 angeschlossen. Sie sind, wie Fig. 5 zeigt, so geschaltet, daß das Hydraulikmedium über die Leitungen 103, 104 unter Druck in die Zylinderräume 37, 38 strömt und dadurch die beiden Kolben 33, 34 sowie 35, 36 mit Druck beaufschlagt, so daß sie die in Fig. 5 dargestellte Neutrallage einnehmen. Da die die Druckräume 37, 38 begrenzenden Kolbenflächen der beiden Aktuatoren 1, 2 gleich groß sind, wird die Wippe 6 an beiden Enden 43, 44 gleich stark belastet, so daß die Wippe 6 ihre Mittelstellung einnimmt. Die freien Enden 43, 44 der Wippe 6 sind so ausgebildet, daß sie in dieser Mittelstellung die Bohrungen 59, 60 der Verschlußstücke 57, 58 der inneren Kolben 34, 36 nicht verschließen. Das Hydraulikmedium wird von einem Tank 105 durch eine Pumpe 106 gefördert.

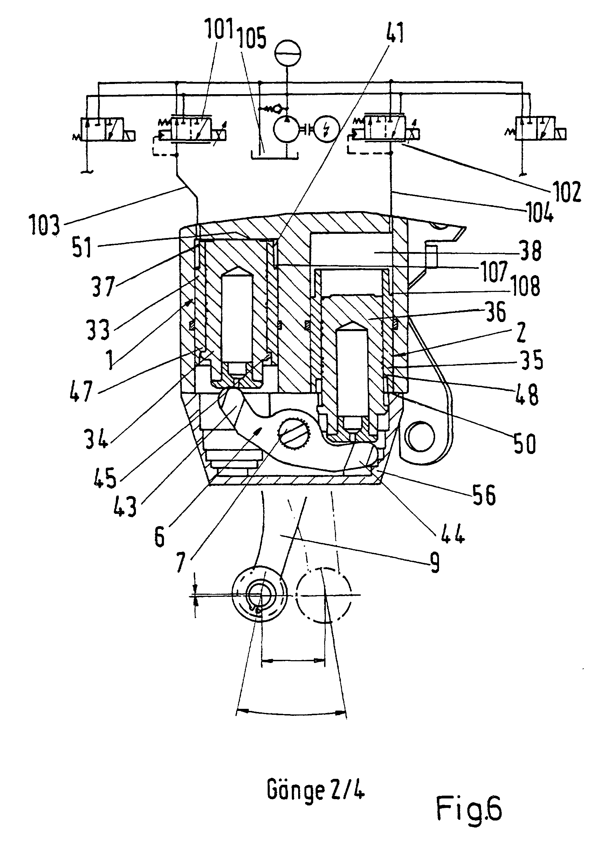

Zum Einlegen der geradzahligen Gänge 2 und 4 in den zugehörigen Gassen des Getriebes wird das Wegeventil 101 so umgeschaltet (Fig. 6), daß der Druckraum 37 zum Tank 105 hin entlastet wird. Das Wegeventil 102 bleibt in seiner Schaltstellung, in der das im Druckraum 38 befindliche Hydraulikmedium unter Druck gesetzt bleibt. Da der Druckraum 37 des Aktuators 1 zum Tank 105 hin entlastet wird, wird der innere Kolben 36 des Aktuators 2 unter dem Hydraulikmediumdruck in der Stellung gemäß Fig. 6 nach unten verschoben. Da der Hohlkolben 35 am deckelseitigen Anschlag 50 anliegt, wird der Hohlkolben 35 durch Druckbeaufschlagung nicht verschoben. Der nach unten aus dem Hohlkolben 35 ausfahrende innere Kolben 36 schwenkt die Wippe 6 in der Darstellung gemäß Fig. 6 im Uhrzeigersinn. Über das Wippenende 43 wird der innere Kolben 34 des Aktuators 1 nach oben verschoben. Über seinen Ringflansch 45 nimmt er den äußeren Hohlkolben 33 mit. Das im Druckraum 37 befindliche Hydraulikmedium wird hierbei über die Leitung 103 in den Tank 105 verdrängt. Die Endstellung ist erreicht, wenn die beiden Kolben 33, 34 am Boden 51 des Druckraumes 37 zur Anlage kommen.

Da die Wippe 6 drehfest auf der Welle 7 sitzt, wird der drehfest mit der Welle verbundene Hebel 9 aus der in Fig. 6 mit strichpunktierten Linien dargestellten Neutrallage im Uhrzeigersinn in die mit ausgezogenen Linien dargestellte Lage geschwenkt. Diese Schwenkbewegung des Hebels 9 wird in eine Verschiebebewegung des Lagerstükkes 10 (Fig. 1) in Pfeilrichtung 11 umgesetzt, wodurch die Schaltwelle 3 entsprechend verschoben wird.

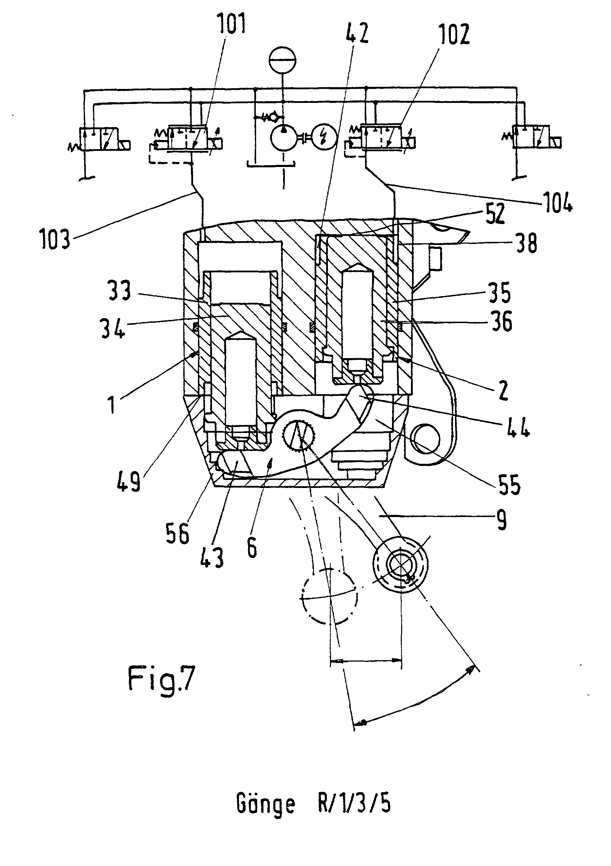

Zum Einlegen der ungeradzahligen Gänge 1, 3, 5 und des Rückwärtsganges R in den zugehörigen Gassen des Getriebes werden die beiden Wegeventile 101 und 102 lediglich umgeschaltet (Fig. 7), so daß die Kolben 33, 34 des Aktuators 1 nach unten bewegt werden. Über die Wippe 6 werden die Kolben 35, 36 des Aktuators 2 nach oben verschoben, die das im Druckraum 38 befindliche Hydraulikmedium über die Leitung 104 in den Tank verdrängen. Die Kolben 35, 36 des Aktuators 2 werden so weit nach oben verschoben, bis sie am Boden 52 des Druckraums 38 zur Anlage kommen. Die beiden Kolben 33, 34 des Aktuators 1 sind durch das unter Druck stehende Hydraulikmedium nach unten verschoben. Bei dieser Verschiebebewegung gelangt zunächst der Hohlkolben 33 mit seiner Stirnseite am deckelseitigen Anschlag 49 zur Anlage. Durch weitere Druckbeaufschlagung wird der innere Kolben 34 relativ zum äußeren Hohlkolben 33 weiter nach unten bewegt, bis die Kolben 35, 36 des Aktuators 2 ihre Anschlagstellung gemäß Fig. 7 einnehmen. Die Wippe 6 wird in diesem Falle entgegen dem Uhrzeigersinn geschwenkt, so daß der Hebel 9 aus der in Fig. 7 mit strichpunktierten Linien angegebenen Neutrallage in die zum Einlegen der Gänge R/1/3/5 notwendige Lage verschwenkt wird. Die Schwenkbewegung des Hebels 9 wird in die Verschiebebewegung des Lagerstückes 10 in Richtung des Pfeiles 11 (Fig. 1) umgesetzt. Die fest mit dem Lagerstück 10 verbundene Schaltwelle 3 wird in der entsprechenden Richtung axial verschoben.

Da der Wippenraum 55 mit Hydraulikmedium gefüllt ist und die Verschlußstücke 57, 58 der inneren Kolben 34, 36 die Durchgangsbohrungen 59, 60 aufweisen, kann beim Verschieben der Kolben das Hydraulikmedium über diese Bohrungen in die inneren Kolben 34, 36 gelangen.

Um aus den Stellungen gemäß Fig. 6 oder 7 in die Mittelstellung gemäß Fig. 5 zu gelangen, müssen die Wegeventile 101, 102 in die Stellung gemäß Fig. 5 geschaltet werden. Das dabei über die Leitungen 103, 104 zugeführte Hydraulikmedium beaufschlagt in der oberen Anschlagstellung die mit Abstand vom Boden 51, 52 der Druckräume 37, 38 liegenden Stirnflächen der jeweiligen Kolben 33, 34 oder 35, 36. Die Ringräume 41, 42 werden von Schulterflächen 107, 108 an der Außenwandung der Hohlkolben 33, 35 begrenzt. Diese ringförmigen Schulterflächen werden wahlweise ebenfalls mit dem Hydraulikmedium beaufschlagt. Der Hohlkolben 33 bzw. 35 nimmt über die Ringschulterfläche 47 bzw. 48 den inneren Kolben 34 bzw. 36 mit. Bei dem in der unteren Stellung befindlichen Kolben 35, 36 (Fig. 6) bzw. 33, 34 (Fig. 7) ist der jeweilige Hohlkolben 35, 33 mit seiner unteren Stirnseite in der beschriebenen Weise am Deckel 56 abgestützt. Dadurch ist nur die Stirnfläche des jeweiligen inneren Kolbens 34, 36 wirksam beaufschlagt. Da diese Fläche kleiner ist als die beaufschlagte Fläche der in der oberen Stellung befindlichen Kolben 33, 34 (Fig. 6) bzw. 35, 36 (Fig. 7), wirken auf beide Enden 43, 44 der Wippe 6 unterschiedliche Kräfte. Die Wippe 6 wird dadurch so lange geschwenkt, bis der jeweilige obere Hohlkolben 33, 35 am jeweiligen deckelseitigen Anschlag 49, 50 zur Anlage kommt. Sobald diese Anschlagstellung erreicht ist, stützen sich an der Wippe 6 nur noch die inneren Kolben 34, 36 ab, deren druckbeaufschlagte Stirnflächen gleich groß sind. Damit ist eine Gleichgewichtsstellung erreicht. Sie wird dadurch gehalten, daß die inneren Kolben 34, 36 mit ihren Ringflanschen 45, 46 an den Ringschultern 47, 48 der Hohlkolben 33, 35 abgestützt sind.

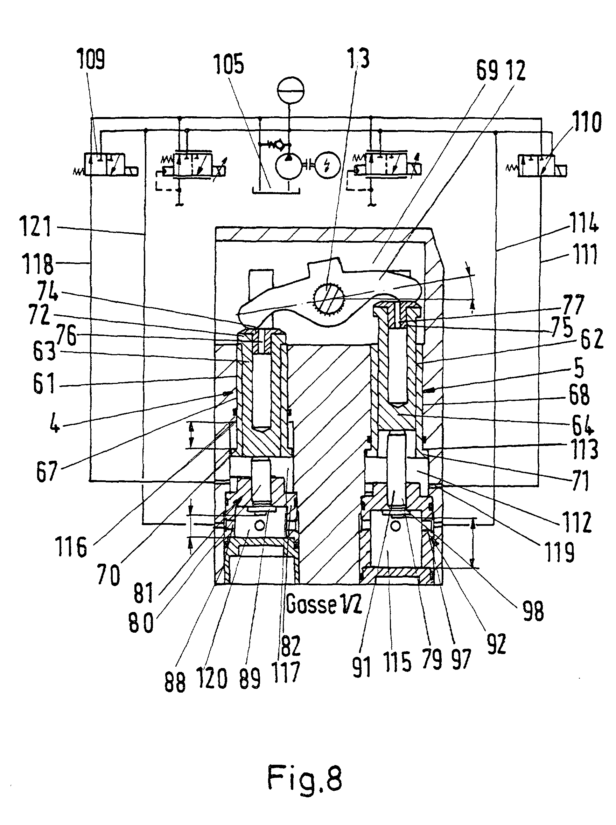

Anhand der Fig. 8 bis 11 wird im einzelnen beschrieben, wie mit den Aktuatoren 4, 5 die Gassen des Schaltgetriebes des Kraftfahrzeuges angewählt werden können, um anschließend in der beschriebenen Weise mit den Aktuatoren 1 und 2 die jeweiligen Gänge einlegen und herausnehmen zu können.

Fig. 8 zeigt die Aktuatoren 4, 5 in einer Stellung, in der die Gasse I für die Gänge 1 und 2 angewählt worden ist. Den Aktuatoren 4, 5 sind zwei Wegeventile 109 und 110 zugeordnet. Das Wegeventil 110 ist so geschaltet, daß das Hydraulikmedium aus dem Tank 105 über eine Leitung 111 und eine Bohrung 119 in einen Druckraum 112 gelangt, der zwischen dem Lagerstück 92 und den beiden Kolben 62, 64 des Aktuators 5 liegt. Da das Hydraulikmedium im Druckraum 112 unter Druck steht, werden beide Kolben 62, 64 in Richtung auf die Wippe 12 belastet. Der Hohlkolben 62 liegt mit seinem Ringflansch 71 an einer Ringschulter 113 an, die in der Innenwandung der Bohrung 68 vorgesehen ist. Der innere Kolben 64 wird unter dem Druck des Hydraulikmediums in Richtung auf die Wippe 12 belastet.

Gleichzeitig wird über eine Leitung 114 Hydraulikmedium über die Öffnung 97 in das Lagerstück 92 gefördert, dessen Innenraum einen Druckraum 115 bildet. Durch dieses unter Druck stehende Hydraulikmedium wird der Kolben 79 nach oben belastet, so daß er mit seinem Ringanschlag 98 am Boden 91 des Lagerstückes 92 anliegt.

Der Kolben 64 belastet die Wippe 12 in der Darstellung gemäß Fig. 8 entgegen dem Uhrzeigersinn. Dadurch wird der Kolben 63 des Aktuators 4 nach unten belastet. Der Kolben 63 liegt mit seinem Ringflansch 72 an der der Wippe 12 zugewandten Stirnseite des Hohlkolbens 61 an und belastet ihn dadurch ebenfalls nach unten. Der Ringflansch 70 des Hohlkolbens 61 hat Abstand von einer Ringschulter 116, die in der Innenwandung der Bohrung 67 vorgesehen ist. Zwischen den beiden Kolben 61, 63 und dem Lagerstück 81 befindet sich ein Druckraum 117, in den eine Leitung 118 mündet, die über das Wegeventil 109 zum Tank 105 entlastet ist.

Das Lagerstück 81 enthält einen Druckraum 120, in dem von einer Leitung 121 über die Öffnung 88 Hydraulikmedium eingebracht werden kann. In der Stellung gemäß Fig. 8 wird das im Druckraum 120 befindliche Hydraulikmedium unter Druck gesetzt, so daß der Anschlag 89 des Kolbens 80 mit Druck beaufschlagt wird. Der Kolben 80 wird dadurch so weit nach oben bewegt, bis er mit seinem Anschlag 89 innerhalb des Druckraums 120 am Boden 82 des Lagerstückes 81 anliegt. Der Kolben 80 ragt in den Druckraum 117 und stützt den inneren Kolben 63 gegen die Kraft der Wippe 12 ab. Der Druck im Druckraum 120 erzeugt somit eine Kraft, die größer ist als die auf den Kolben 63 von der Wippe 12 in entgegengesetzter Richtung ausgeübte Kraft.

In dieser Stellung der Kolben 61 bis 64 der beiden Aktuatoren 4, 5 ist die Gasse I für den ersten und zweiten Gang des Schaltgetriebes angefahren. Das im Wippenraum 69 befindliche Hydraulikmedium steht über die Bohrungen 76, 77 der Verschlußstücke 74, 75 mit dem Innenraum der Kolben 63, 64 in Verbindung.

Da die Wippe 12 drehfest auf der Welle 13 sitzt, wird über den Hebel 15 und die Verbindungsstange 18 (Fig. 1) das Lagerstück 10 und damit die Schaltwelle 3 um ihre Achse in Drehrichtung 21 (Fig. 1) gedreht.

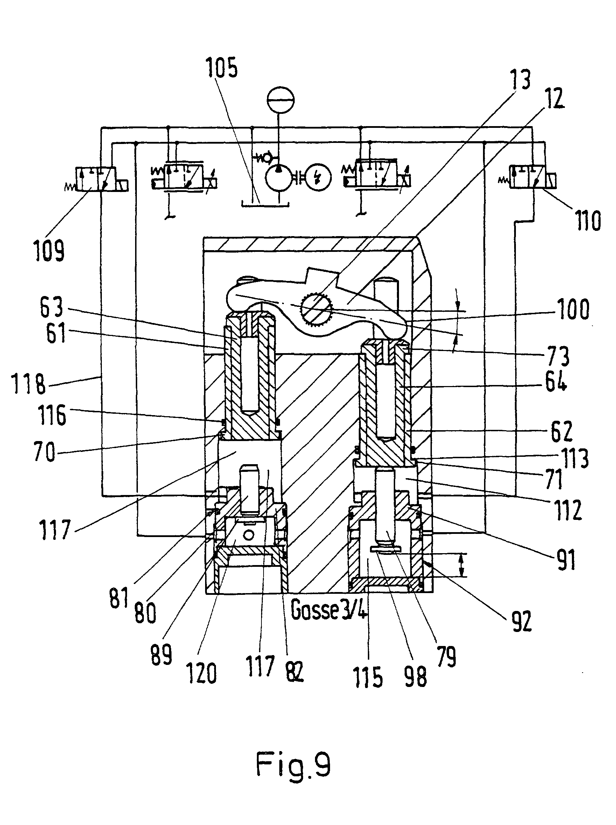

Um die Gasse II den dritten bzw. vierten Gang anzuwählen (Fig. 9), wird das Wegeventil 109 lediglich, bezogen auf die Stellung gemäß Fig. 8, umgeschaltet. Nunmehr wird das Hydraulikmedium im Druckraum 117 über die Leitung 118 mit Druck beaufschlagt. Dadurch werden beide Kolben 61, 63 mit Druckmedium beaufschlagt und dadurch nach oben verschoben, bis der Hohlkolben 61 mit seinem Ringflansch 70 an der gehäuseseitigen Ringschulter 116 zur Anlage kommt. Hierbei hebt der innere Kolben 63 vom Kolben 80 ab, der weiterhin unter dem Druck im Druckraum 120 steht und dadurch mit seinem Anschlag 89 in Anlage am Boden 82 des Lagerstückes 81 gehalten wird.

Die Summe der im Druckraum 117 beaufschlagten Flächen der Kolben 61, 63 ist größer als die beaufschlagte wirksame Fläche des Kolbens 64 im Druckraum 112. Da der Hohlkolben 62 mit seinem Ringflansch 71 an der gehäuseseitigen Ringschulter abgestützt ist, wird die im Druckraum 112 beaufschlagte Fläche dieses Hohlkolbens 62 nicht wirksam. Dadurch wird die Wippe 12 wird durch den Kolben 63 in der Darstellung gemäß Fig. 9 im Uhrzeigersinn geschwenkt, wobei die Welle 13 im Uhrzeigersinn um ihre Achse gedreht wird. Über den Hebel 15 und die Verbindungsstange 18 wird die Schaltwelle 3 durch das Lagerstück 10 entsprechend gedreht. Das Wippenende 100 drückt den Kolben 64 nach unten. Der Hohlkolben 62 bleibt in seiner Lage, verglichen mit der Stellung gemäß Fig. 8.

Beim Verschieben des Kolbens 64 wird der Kolben 79 nach unten verschoben, weil seine druckbeaufschlagte Fläche im Druckraum 115 kleiner ist als die mit demselben Druck beaufschlagte Fläche des Kolbens 63. Der Anschlag 98 des Kolbens 64 hebt hierbei vom Boden 91 des Lagerstückes 92 ab. Sobald der Kolben 64 mit seinem Ringflansch 73 an der der Wippe 12 zugewandten Stirnseite des druckbeaufschlagten Kolbens 62 anschlägt, ist die gewünschte Gasse II angewählt.

Die beiden Kolben 79, 80 haben einen Durchmesser, der kleiner ist als der Durchmesser der Stirnseite des inneren Kolbens 63, 64. Aufgrund der beschriebenen Durchmesserverhältnisse und der Druckverhältnisse in den Druckräumen 112, 115 wird erreicht, daß der innere Kolben 64 durch den bolzenförmigen Kolben 79 in der in Fig. 9 dargestellten Mittelposition gehalten wird.

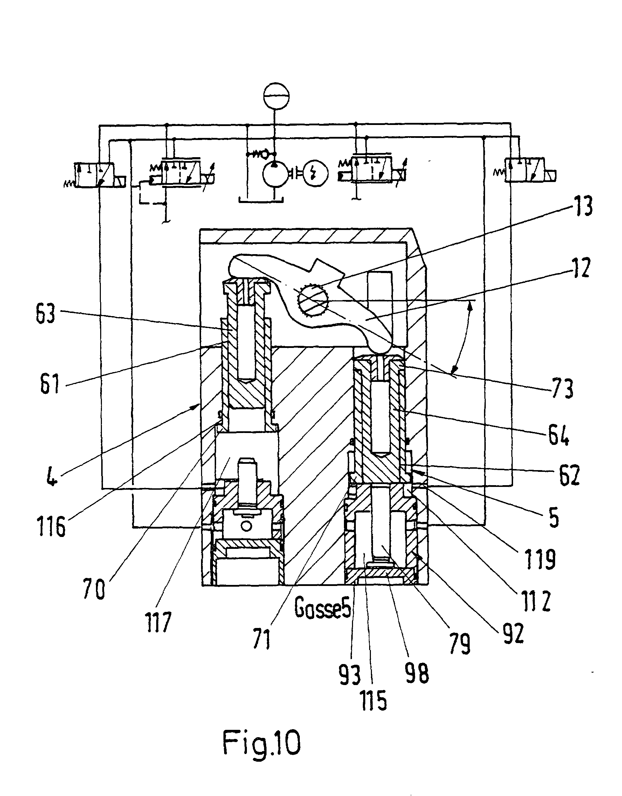

Aus der Stellung gemäß Fig. 9 kann die Welle 13 weiter im Uhrzeigersinn in die Lage gemäß Fig. 10 verstellt werden, um die Gasse III für den fünften Gang des Schaltgetriebes anzuwählen. Der Druckraum 112 wird in diesem Fall zum Tank 105 hin entlastet. Dadurch wird die auf die Wippe 12 wirkende Gegenkraft nur noch aus der im Druckraum 115 beaufschlagten Fläche des Kolbens 79 erzeugt. Da der Druckraum 117 des Aktuators 4 weiterhin mit Druck beaufschlagt wird, kann nunmehr der innere Kolben 63 weiter nach oben relativ zum Hohlkolben 61 verschoben werden. Dadurch wird die Wippe 12 weiter um ihre Achse im Uhrzeigersinn geschwenkt. Der Hohlkolben 61 bleibt mit seinem Ringflansch 70 in Anlage an der gehäuseseitigen Ringschulter 116. Bei dieser Schwenkbewegung drückt die Wippe 12 den inneren Kolben 64 nach unten. Über seinen Ringflansch 73 nimmt er hierbei den Hohlkolben 62 mit und verschiebt ihn ebenfalls nach unten. Hierbei wird der bolzenförmige Kolben 79 entsprechend in das Lagerstück 92 verschoben, bis er mit seinem Anschlag 98 auf dem unteren Lagerstück 93 aufliegt. In dieser unteren Stellung der Kolben 62, 64 des Aktuators 5 wird die in den Druckraum 112 mündende Bohrung 119 nicht verschlossen.

Aufgrund der Schwenkbewegung der Wippe 12 wird die Welle 13 in entsprechendem Maße um ihre Achse gedreht. Über den Hebel 15 und die Verbindungsstange 18 (Fig. 1) wird die Schaltwelle 3 des Getriebes über das Lagerstück 10 in erforderlichem Maße um ihre Achse gedreht.

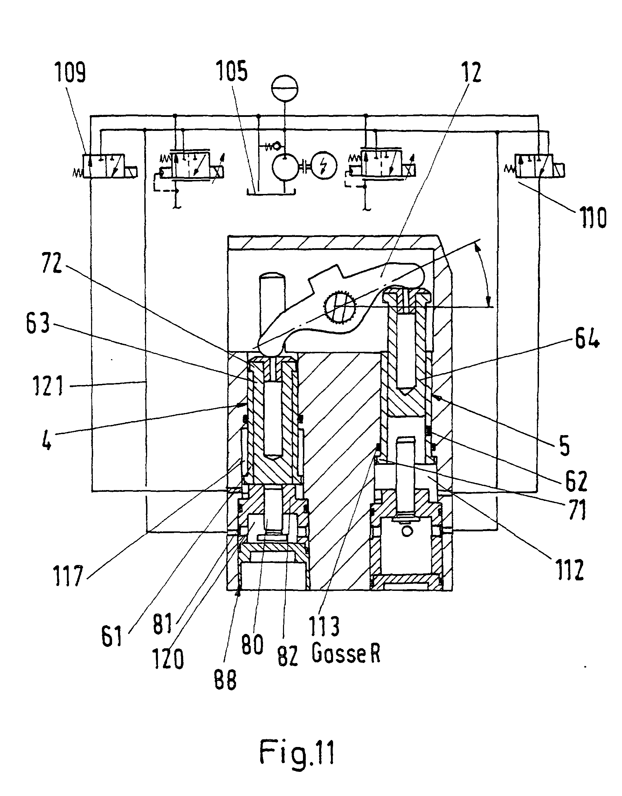

Fig. 11 zeigt die Lage der Kolben der beiden Aktuatoren 4 und 5, wenn die Gasse IV zum Einlegen des Rückwärtsganges R angefahren worden ist. Ausgehend von der Stellung gemäß Fig. 8 wird der Druckraum 117 des Aktuators 4 zum Tank 105 hin entlastet. Der Druckraum 120 bleibt über die Leitung 121 mit Systemdruck beaufschlagt. Über das Wegeventil 110 wird der Druckraum 112 des Aktuators 5 weiterhin mit Druck beaufschlagt, so daß der innere Kolben 64 nach oben gefahren wird. Der Hohlkolben 62 liegt mit seinem Ringflansch 71 an der gehäuseseitigen Ringschulter 113 an und kann dadurch nicht weiter verschoben werden. Über den Kolben 64 wird die Wippe 12 entgegen Uhrzeigersinn gedreht. Sie verschiebt dadurch den inneren Kolben 63 des Aktuators 4 infolge der Druckentlastung nach unten. Der innere Kolben 62 nimmt über seinen Ringflansch 72 den Hohlkolben 61 mit. Der bolzenförmige Kolben 80, dessen im Druckraum 120 beaufschlagte Fläche kleiner ist als die im Druckraum 112 beaufschlagte Fläche des Kolbens 64, wird dadurch in das Lagerstück 81 geschoben. Die Wippe 12 wird so weit durch den Kolben 64 geschwenkt, bis der innere Kolben 63 am Boden 82 des Lagerstückes 81 oder der Kolben 80 am Lagerstück 88 zur Anlage kommt.

Durch entsprechendes Umschalten der Wegeventile 109, 110 können die Kolben 61 bis 64 der beiden Aktuatoren 4, 5 entsprechend gegensinnig verschoben werden. Damit die jeweiligen Drehbewegungen der Wellen 7 und 13 in die erforderlichen Dreh- und Verschiebebewegungen der Schaltwelle 3 des Getriebes problemlos umgesetzt werden können, kann der in das Lagerstück 10 eintauchende Hebel 9 am freien Ende anstelle der beiden Laufscheiben 29, 30 beispielsweise auch kugelförmig ausgebildet sein. Auch dann ist eine Verschiebe- bzw. Verdrehbewegung des Lagerstückes 10 gewährleistet.

Die Aktuatoren 1, 2, 4, 5 liegen unmittelbar achsparallel innerhalb des Gehäuses 25 nebeneinander. Dadurch hat dieser Stellantrieb eine äußerst kompakte Form, so daß er in Fahrzeugen untergebracht werden kann, bei denen nur sehr kleine Einbauräume für den Stellantrieb zur Verfügung stehen. Dabei arbeitet der Stellantrieb äußerst zuverlässig. Um die beschriebenen Verstellbewegungen der Aktuatoren 1, 2, 4, 5 auszulösen, können im Kraftfahrzeug Schaltknöpfe vorgesehen sein, die lediglich gedrückt werden müssen, um die erforderlichen Verstellbewegungen der einzelnen Kolben der Aktuatoren auszulösen. Es ist auch möglich, die beschriebenen Bewegungen der Kolben der Aktuatoren durch einen Schalthebel auszulösen, der lediglich in der entsprechenden Richtung angetippt werden muß, um den gewünschten Gang einzulegen. Die beschriebenen Dreh- und Verschiebebewegungen der Schaltwelle 3 laufen innerhalb kürzester Zeiten ab, so daß die gewünschten Gänge rasch eingelegt werden. Dadurch ist insbesondere auch ein sportliches Fahren ohne weiteres möglich.

Die beschriebene und dargestellte achsparallele Anordnung der Aktuatoren 1, 2, 4, 5 ist eine für die Fertigung und Montage optimale Lösung. Falls die Einbauverhältnisse es erfordern, kann wenigstens einer der Aktuatoren auch winklig zu seinem Gegenaktuator angeordnet sein. In diesem Fall liegen die beiden Arme der zugehörigen Wippe nicht mehr fluchtend, sondern versetzt und im Winkel zueinander.

Die Wegeventile 101, 102 sind vorzugsweise Proportionalwegeventile mit Druckrückführung (Druckminderventile), um den Druck während des Einlegens des Ganges und des Synchronisiervorganges modulieren zu können.

Den Wellen 7, 13 ist jeweils ein rotatorisches Meßsystem 123, 124 zugeordnet (Fig. 1 bis 3). Vorzugsweise sind die Meßsysteme 123, 124 Potentiometer; sie können aber auch in berührungsloser Ausführung vorgesehen sein.

## Patentansprüche

1. Stellantrieb für Schaltgetriebe von Kraftfahrzeugen, mit Aktuatoren (1, 2; 4, 5), mit denen eine Dreh- und eine Verschiebebewegung einer Schaltwelle (3) des Schaltgetriebes ausgeführt wird, um Gassen des Schaltgetriebes anzufahren und Gänge einzulegen, und die parallel nebeneinander liegen, von denen zwei Aktuatoren (1, 2) zum Gangeinlegen mit einer ersten Wippe (6) zusammenwirken, die drehfest auf einer ersten Welle (7) sitzt, auf der drehfest ein erster Hebel (9) sitzt und deren Schwenkbewegung zum Verschieben der Schaltwelle (3) führt, und zwei weitere Aktuatoren (4, 5) zur Gassenwahl mit einer weiteren Wippe (12) zusammenwirken, deren Schwenkbewegung zum Drehen der Schaltwelle (3) führt,
**dadurch gekennzeichnet, daß** die Aktuatoren (1, 2; 4, 5) in einem Gehäuse (25) untergebracht sind, daß der erste Hebel (9) der ersten Wippe (6) mit einem Anlenkstück (10) gekoppelt ist, das dreh- und verschiebefest mit der Schaltwelle (3) verbunden ist, daß die weitere Wippe (12) drehfest auf einer zweiten Welle (13) sitzt, die parallel zur ersten Welle (7) verläuft und über einen drehfest auf ihr sitzenden zweiten Hebel (15) und eine Verbindungsstange (18) gelenkig mit dem Anlenkstück (10) verbunden ist, und daß die beiden Wippen (6, 12) beiderseits der Aktuatoren (1, 2; 4, 5) liegen.

2. Stellantrieb nach Anspruch 1,
**dadurch gekennzeichnet, daß** die zur Gassenwahl des Schaltgetriebes vorgesehenen zwei Aktuatoren (4, 5) auf gleicher Höhe nebeneinander liegen.

3. Schaltgetriebe nach Anspruch 1 oder 2,
**dadurch gekennzeichnet, daß** die zweite Welle (13) senkrecht zur Achsrichtung der Aktuatoren (4, 5) liegt.

4. Stellantrieb nach einem der Ansprüche 1 bis 3,
**dadurch gekennzeichnet, daß** die zum Einlegen des Ganges des Schaltgetriebes vorgesehenen zwei Aktuatoren (1, 2) auf gleicher Höhe nebeneinander liegen.

5. Stellantrieb nach einem der Ansprüche 1 bis 4,
**dadurch gekennzeichnet, daß** die erste Welle (7) senkrecht zur Achse der Aktuatoren (1, 2) liegt.

6. Stellantrieb nach einem der Ansprüche 1 bis 5,
**dadurch gekennzeichnet, daß** das Anlenkstück (10) als Hohlkörper ausgebildet ist, in den der erste Hebel (9) der ersten Welle (7) eingreift.

7. Stellantrieb nach einem der Ansprüche 1 bis 6,
**dadurch gekennzeichnet, daß** die Hebel (9, 15) der beiden Wellen (7, 13) der Wippen (6, 12) winklig zueinander liegen.

8. Stellantrieb nach einem der Ansprüche 1 bis 7,
**dadurch gekennzeichnet, daß** die Aktuatoren (1, 2; 4, 5) jeweils mindestens zwei gegeneinander bewegliche Kolben (33 bis 36; 61 bis 64; 79, 80) aufweisen.

9. Stellantrieb nach Anspruch 8,
**dadurch gekennzeichnet, daß** die Kolben (33 bis 36; 61 bis 64) jedes Aktuators (1, 2; 4, 5) ineinander liegen.

10. Stellantrieb nach einem der Ansprüche 1 bis 9,
**dadurch gekennzeichnet, daß** jedem Aktuator (1, 2; 4, 5) ein Wegeventil (101, 102; 109, 110) zugeordnet ist.

11. Stellantrieb nach einem der Ansprüche 1 bis 10,
**dadurch gekennzeichnet, daß** zumindest die eine Wippe, vorzugsweise beide Wippen (6, 12), in einem Wippenraum (55, 69) des Gehäuses (25) liegt, der mit Hydraulikmedium füllbar ist, und daß vorteilhaft die Welle (7, 13) der jeweiligen Wippe (6, 12) mit wenigstens einer Dichtung (26 bis 28) abgedichtet ist.

12. Stellantrieb nach Anspruch 11,
**dadurch gekennzeichnet, daß** die Kolben (33 bis 36; 61 bis 64) der Aktuatoren (1, 2; 4, 5) in den jeweiligen Wippenraum (55, 69) ragen.

13. Stellantrieb nach einem der Ansprüche 1 bis 12,
**dadurch gekennzeichnet, daß** die Aktuatoren (4, 5) zur Gassenwahl jeweils einen Hilfskolben (79, 80) aufweisen.

14. Stellantrieb nach einem der Ansprüche 1 bis 13,
**dadurch gekennzeichnet, daß** den Wellen (7, 13) jeweils ein rotatorisches Meßsystem (123, 124) zugeordnet ist.

## Claims

1. An actuating drive for the gearbox of a motor vehicle with actuators (1, 2; 4, 5) with which a turning and a shifting of a selection shaft (3) of the gearbox is performed in order to approach the gates of the gearbox and engage the gears, and which are juxtaposed parallel to each other, of which two actuators (1, 2) act in combination to engage gears with a first rocker (6), which is fitted rotation-fast to a first shaft (7), on which a first lever (9) is fitted rotation-fast and whose pivoting motion leads to the translation of the selection shaft (3), and two further actuators (4, 5) acting in combination with a further rocker (12), whose pivoting motion leads to turning of the selection shaft (3),
**characterized in that** the actuators (1, 2; 4, 5) are contained in a housing (25), that the first lever (9) of the first rocker (6) is coupled with a pivot member (10) which is rotation- and translation-fast connected to the selection shaft (3), that the further rocker (12) is rotation-fast seated on a second shaft (13), proceeding parallel to the first shaft (7) and is pivoted via a second lever (15), fitted rotation-fast on it, and a connecting rod (18) with the coupling member (10) and that the two rockers (6, 12) are situated on both sides of the actuators (1, 2; 4, 5).

2. An actuating drive according to claim 1,
**characterized in that** the two actuators (4, 5) provided for the selection of the gate of the gearbox are juxtaposed on the same level.

3. An actuating drive according to claim 1 or 2,
**characterized in that** the second shaft (13) is situated perpendicularly to the direction of the axis of the actuators (4, 5).

4. An actuating drive according to one of the claims 1 to 3,
**characterized in that** the two actuators (1, 2), provided for the engagement of the gear of the gearbox, are juxtaposed to each other on the same level.

5. An actuating drive according to one of the claims 1 to 4,
**characterized in that** the first shaft (7) is situated perpendicularly to the axis of the actuators (1, 2).

6. An actuating drive according to one of the claims 1 to 5,
**characterized in that** the coupling member (10) is formed as a hollow body, into which the first lever (9) of the first shaft (7) fits.

7. An actuating drive according to one of the claims 1 to 6,
**characterized in that** the levers (9, 15) of the two shafts (7, 13) of the rockers (6, 12) are situated at an angle to each other.

8. An actuating drive according to one of the claims 1 to 7,
**characterized in that** the actuators (1, 2; 3, 4) each have at least two pistons (33 to 36; 61 to 64; 79, 80) movable against each other.

9. An actuating drive according to claim 8,
**characterized in that** the pistons (33 to 36; 61 to 64) of each actuator (1, 2; 4, 5) are interpenetrating

10. An actuating drive according to one of the claims 1 to 9,
**characterized in that** each actuator (1, 2; 4, 5) is assigned to one control valve (101, 102; 109, 110).

11. An actuating drive according to one of the claims 1 to 10,
**characterized in that** at least one rocker, preferably both rockers (6, 12) are situated in a rocker chamber (55, 69) of the housing (25) which can be filled with a hydraulic medium and that advantageously the shaft (7, 13) of the respective rocker (6, 12) is sealed with at least one seal (26 to 28).

12. An actuating drive according to claim 11,
**characterized in that** the pistons (33 to 36; 61 to 64) of the actuators (1, 2; 4, 5) project into the respective rocker chamber (55, 69).

13. An actuating drive according to one of the claims 1 to 12,
**characterized in that** the actuators (4, 5) each possess an auxiliary piston (79, 80) for the selection of the gate.

14. An actuating drive according to one of the claims 1 to 13,
**characterized in that** one rotatory measuring system (123, 124) is provided for each shaft (7, 13).

## Revendications

1. Actionneur pour boîtes de vitesses des véhicules automobiles avec acteurs (1, 2; 4, 5) avec lesquels est effectué un mouvement de rotation et de translation d'un arbre de changement de vitesse (3) de la boîte de vitesses pour se diriger vers les voies de la boîte de vitesses et mettre les vitesses et lesquels sont situés parallèlement juxtaposés, desquels deux acteurs (1, 2) opèrent conjointement pour changement de vitesse avec une première bascule (6) laquelle est placée résistant à la torsion sur un premier arbre (7) lequel est placé sur un premier levier (9) résistant à la torsion et le mouvement pivotant induit à la translation de l'arbre de changement de vitesse (3) et deux acteurs supplémentaires (4, 5) opèrent conjointement pour la sélection de voie avec une bascule supplémentaire (12), et dont le mouvement pivotant induit à la rotation de l'arbre de changement de vitesse (3),
**caractérisé en ce que** les acteurs (1, 2; 4, 5) sont placés dans une boîte (25), que le premier levier (9) de la première bascule (6) est couplé avec une pièce articulée (10) laquelle est connectée résistant à la torsion et à la translation avec l'arbre de changement de vitesse (3), que la bascule supplémentaire (12) est placée résistant à la torsion sur un deuxième arbre (13), lequel s'allonge parallèlement au premier arbre (7) et est connectée par articulation avec la pièce articulée (10) par un deuxième levier (15) étant placé résistant à la torsion sur ledit et un barre de raccordement (18), et que les deux bascules (6, 12) sont situées des deux côtés des acteurs (1, 2; 4, 5).

2. Actionneur selon revendication 1,
**caractérisé en ce que** les deux acteurs (4, 5), prévus pour la sélection de la voie de la boîte de vitesse, sont situés à la même hauteur côte à côte.

3. Actionneur selon revendication 1 ou 2,
**caractérisé en ce que** le deuxième arbre (13) est placé verticalement à la direction de l'axe des acteurs (4, 5).

4. Actionneur selon l'une des revendications 1 à 3,
**caractérisé en ce que** les deux acteurs (1, 2), prévus pour passer la vitesse de la boîte de vitesses sont juxtaposés à la même hauteur.

5. Actionneur selon l'une des revendications 1 à 4,
**caractérisé en ce que** le premier arbre (7) est situé perpendiculairement à l'axe des acteurs (1, 2).

6. Actionneur selon l'une des revendications 1 à 5,
**caractérisé en ce que** la pièce articulée (10) est formée comme corps creux dans lequel entre le premier levier (9) du premier arbre (7).

7. Actionneur selon l'une des revendications 1 à 6,
**caractérisé en ce que** les leviers (9, 15) des deux arbres (7, 13) des bascules (6, 12) sont juxtaposés à angles.

8. Actionneur selon l'une des revendications 1 à 7,
**caractérisé en ce que** les acteurs (1, 2; 4, 5) comprennent chacun au moins deux pistons (33 à 36; 61 à 64; 79,80), mobiles en sens opposé.

9. Actionneur selon revendication 8,
**caractérisé en ce que** les pistons (33 à 36, 61 à 64) de chaque acteur (1, 2; 4, 5) sont situés l'un dans l'autre.

10. Actionneur selon l'une des revendications 1 à 9,
**caractérisé en ce qu'**à chaque acteur (1, 2; 4, 5) est adjointe un distributeur (101, 102; 109, 110).

11. Actionneur selon l'une des revendications 1 à 10,
**caractérisé en ce qu'**au moins ladite bascule, de préférence les deux bascules (6, 12) est située dans un espace de bascule (55, 69) de la boîte (25) lequel peut être empli avec du fluide hydraulique et qu'avantageusement l'arbre (7, 13) de la bascule (6, 12) correspondante est étanché avec au moins un joint (26 à 28).

12. Actionneur selon revendication 11,
**caractérisé en ce que** les pistons (33 à 36; 61 à 64) des acteurs (1, 2; 4, 5) se projettent dans l'espace de bascule (55, 69) correspondant.

13. Actionneur selon l'une des revendications 1 à 12,
**caractérisé en ce que** les acteurs (4, 5) pour la sélection de la voie comprennent chacun un piston auxiliaire (79; 80).

14. Actionneur selon l'une des revendications 1 à 12,
**caractérisé en ce qu'**aux arbres (7, 13) est adjoint chaque fois un système de mesure rotatif (123, 124).
